## Europäisches Patentamt

## European Patent Office

## Office européen des brevets

(19)

(11) Veröffentlichungsnummer: **0 066 256**
**B1**

(12) # EUROPÄISCHE PATENTSCHRIFT

(45) Veröffentlichungstag der Patentschrift:
27.08.86

(21) Anmeldenummer: 82104617.4

(22) Anmeldetag: 27.05.82

(51) Int. Cl.⁴: **B 01 D  39/06,** B 01 D  23/10,
C 01 F  7/02

(54) **Verwendung von hochgeglühtem alpha-Al2O3 als Filterhilfsmittel zur Reinigung von alkalischen Lösungen.**

(30) Priorität: 03.06.81 DE 3121953

(43) Veröffentlichungstag der Anmeldung:
08.12.82 Patentblatt 82/49

(45) Bekanntmachung des Hinweises auf die Patenterteilung:
27.08.86 Patentblatt 86/35

(84) Benannte Vertragsstaaten:
AT BE CH DE FR GB IT LI LU NL SE

(56) Entgegenhaltungen:
FR - A - 2 111 722
FR - A - 2 220 490
US - A - 4 053 579

CHEMICAL ABSTRACTS, Band 80, Nr. 16, 22. April 1974,
Seite 135, Nr. 85329p, Columbus, Ohio, USA;

(73) Patentinhaber: Henkel Kommanditgesellschaft auf
Aktien, Postfach 1100 Henkelstrasse 67,
D-4000 Düsseldorf-Holthausen (DE)

(72) Erfinder: Diekötter, Friedrich Wilhelm, Dr.,
Drosselweg 21, D-4018 Langenfeld (DE)

EP 0 066 256 B1

## Beschreibung

Es ist allgemein bekannt, bei der Filtration von Flüssigkeiten zusätzlich zu dem eigentlichen Filter auch Filterhilfsmittel – sogenannte precoats – zu verwenden. Die Filterhilfsmittel bezwecken einerseits, dass auch feinteilige Fremdstoffe aus der zu filtrierenden Flüssigkeit abgetrennt werden können. Die in den Lösungen enthaltenen Feststoffteilchen lagern sich am Filterhilfsmittel ab, wobei noch genügend freie Öffnungen für das Durchströmen des Filtrats verbleiben müssen. Andererseits bewirken die Filterhilfsmittel, dass der sich während der Filtration ausbildende Filterkuchen für die Flüssigkeit hinreichend durchlässig bleibt. Daher kann es zweckmässig sein, auch während der Filtration der zu filtrierenden Flüssigkeit weiteres Filterhilfsmittel zuzusetzen.

Als Filterhilfsmittel werden meist Kieselgur, Perlit oder Zellulosefasern verwendet, die in der Wirkung anderen Filterhilfsmitteln überlegen sind (Ullmanns Encyklopädie der technischen Chemie, 4. Auflage, Band 2 (1972), Seiten 195 und 196, und Kirk-Othmer, Encyclopedia of Chemical Technology, 3. Auflage, Band 10 (1980), Seite 296).

Es hat sich aber herausgestellt, dass bei der Verwendung von Kieselgur und Perlit als Filterhilfsmittel zur Reinigung von alkalischen Lösungen, insbesondere von stark alkalischen Lösungen, diese Filterhilfsmittel allmählich von den Lösungen angegriffen werden. Dies gilt in besonderem Masse für die Filtration heisser alkalischer Lösungen, die insbesondere eine Temperatur im Bereich von 80–100°C aufweisen. Insbesondere hat sich gezeigt, dass bei der Filtration von Natriumaluminatlösungen sowohl Kieselgur als auch Perlit unter Bildung von Natriumaluminiumsilikaten mit der Aluminatlösung reagieren können, so dass die Maschen des verwendeten Filters, beispielsweise eines Drahtgewebes, zuwachsen, und der Filterkuchen bereits nach einem eintägigen Kontakt mit der Lösung verhärtet. Aufwendige Reinigungsarbeiten sind die Folge. Auch Zellulosefasern sind dem Einfluss einer stark alkalischen Lösung nicht gewachsen.

Kohle könnte an sich zur Reinigung von stark alkalischen Lösungen Verwendung finden, jedoch liegt der Preis der Kohle wesentlich höher als derjenige von Kieselgur und Perlit. Überdies macht die Verwendung von Kohle als Filterhilfsmittel eine sehr aufwendige Reinigung der Filtrationsanlage nach der Filtration notwendig.

Dementsprechend bestand die Aufgabe, ein mit Kieselgur und Perliten vergleichbares preisgünstiges Filterhilfsmittel zu finden, bei dessen Verwendung die Filtration von – vorzugsweise heissen – alkalischen Lösungen nicht zur Verstopfung des Filterkuchens sowie des eigentlichen Filters führt.

Überraschenderweise wurde nun gefunden, dass hochgeglühtes α-Aluminiumoxid diesen Anforderungen entspricht.

Gegenstand der Erfindung ist daher die Verwendung von hochgeglühten α-Al$_2$O$_3$ als Filterhilfsmittel zur Reinigung von alkalischen Lösungen, insbesondere von stark alkalischen Lösungen. Vorzugsweise wird das hochgeglühte α-Aluminiumoxid zur Reinigung von heissen Aluminatlösungen, insbesondere von Natrium- oder Kaliumaluminatlösungen, verwendet, die vorzugsweise eine Temperatur im Bereich von 80 bis 100°C aufweisen. Das erfindungsgemäss eingesetzte Filterhilfsmittel dient insbesondere zur Entfernung von Trübstoffen aus diesen Lösungen. Es hat sich nämlich herausgestellt, dass das hochgeglühte α-Aluminiumoxid auch gegenüber heissen stark alkalischen Lösungen inert ist. Selbst wenn im Falle der Filtration einer Aluminatlösung sich noch minimale Mengen des Filterhilfsmittels lösen würden, so würde dies auf das Filtrat keinen Einfluss haben, da sich hierbei nur Aluminat bilden könnte.

Das einzusetzende hochgeglühte α-Al$_2$O$_3$ wird in bekannter Weise durch Glühen von Aluminiumoxid hergestellt. Die Glühtemperaturen liegen im allgemeinen zwischen 1200 und 1850°C. Das geglühte Aluminiumoxid wird anschliessend zur gewünschten Korngrösse vermahlen. Für den Einsatz als Filterhilfsmittel werden die Korngrösse und die Korngrössenverteilung des Aluminiumoxids in Abhängigkeit von dem jeweiligen Verwendungszweck gewählt.

Das α-Aluminiumoxid kann auf den verschiedensten Filtern Verwendung finden, beispielsweise auf Sieben, Geweben, Filzen, Vliesen, porösen Massen und Membranen. Es können dabei Trommelfilter oder auch andere Filter verwendet werden, wobei entweder durcklos oder auch unter Überdruck oder unter Anwendung von Vakuum gearbeitet werden kann.

In diesem Zusammenhang soll noch bemerkt werden, dass poröse Körper aus α-Aluminiumoxid an sich bekannt sind. So beschreibt die DE-A-2 409 634 einen porösen Körper aus einem Material mit kristalliner Struktur aus α-Aluminiumoxid, wobei dieser Körper mehrere, seine gesamte Dikke durchquerende Kanäle aufweist und der Durchmesser dieser Kanäle mindestens auf einem Abschnitt bei Durchgang durch diesen Körper kleiner als 0,01 μm ist. Ein solcher Körper kann aus einem Aluminat des Typs β-Aluminiumoxid hergestellt werden, wobei dieses Aluminat bei einer Temperatur erhitzt wird, die unter der Schmelztemperatur des Aluminats und über der Sublimiertemperatur des Metalloxids des Aluminats liegt. Weiter erwähnt Kirk-Othmer, Encyclopedia of Chemical Technology, 3. Auflage, Band 2 (1978), Seite 237, die Verwendung von gesintertem Aluminiumoxid als Filtermittel für geschmolzenes Metall und Ullmanns Encyklopädie der technischen Chemie, 4. Auflage, Band 7 (1974), Seite 327, die Anwendung von aktiven Aluminiumoxiden als Filtermedium. Demgegenüber ist jedoch die Anwendung von hochgeglühtem α-Al$_2$O$_3$ als Filterhilfsmittel in der Literatur weder vorbeschrieben, noch nahegelegt.

Die nachfolgenden Beispiele erläutern die Erfindung, ohne sie in irgendeiner Weise zu beschränken.

Beispiel 1

In diesem Beispiel wird eine Filtration in einer labormässigen Filtrationsanlage beschrieben.

Als Filtrationsgerät diente eine Säule von insgesamt 250 ml Nutzinhalt, an deren unterem Ende ein austauschbares Filterdrahtgewebe mit einer Maschenweite von 80 μm befestigt war. Die gesamte Säule war von einem Heizmantel umgeben, der von 90 °C warmem Wasser durchflossen wurde. Zu Beginn der Filtration wurde auf das Maschengewebe ein Filterbett von hochgeglühtem α-Al$_2$O$_3$ als Filterhilfsmittel aufgebracht. Es fanden hierbei 0,285 g Filterhilfsmittel pro 5,7 cm² Filterfläche Verwendung. In diese Säule wurden 200 ml einer trüben Natriumaluminatlauge mit einer Temperatur von ca. 90 °C eingebracht, die zusätzlich 1 g/l Filterhilfsmittel suspendiert enthielt. Dieses in der Lauge suspendierte Filterhilfsmittel soll ein Zusetzen des Filterbettes beziehungsweise Filterkuchens verhindern. Nach Füllung der Filtrationssäule wurde mit Stickstoff ein Überdruck von 1 bar in der Säule erzeugt. Gemessen wurde die Durchlaufzeit der Säulenfüllung; hierbei zeigte sich eine Filtrationsgeschwindigkeit von umgerechnet circa 6 m³ Lauge pro m² Filterfläche und Stunde. Bei dieser Filtration wurde ein klares Filtrat erhalten.

Beispiel 2

Bei einem betriebsmässigen Versuch stand eine Filterfläche von insgesamt 15 m² – verteilt auf 20 Filterböden – zur Verfügung, wobei ein Filterdrahtgewebe mit einer Maschenweite von 80 μm eingesetzt wurde. Auf dieses Maschengewebe wurden circa 0,5 bis 1 kg α-Al$_2$O$_3$ pro m² Filterfläche aufgebracht. Der zu filtrierenden, trüben Natriumaluminatlauge mit einer Temperatur von ca. 90 °C wurde kein zusätzliches α-Al$_2$O$_3$ zugesetzt. Es wurde mit einem Überdruck von 1 bis 2 bar gearbeitet. Die im Betrieb durchgesetzte Filtratmenge betrug 15 bis 20 m³ pro Stunde. Auch bei diesem Versuch wurde ein klares Filtrat erhalten.

**Patentansprüche**

1. Verwendung von hochgeglühtem α-Al$_2$O$_3$ als Filterhilfsmittel zur Reinigung von alkalischen Lösungen.

2. Verwendung von hochgeglühtem α-Al$_2$O$_3$ gemäss Anspruch 1 als Filterhilfsmittel zur Reinigung von Aluminatlösungen, insbesondere von Natrium- und/oder Kaliumaluminatlösungen, die vorzugsweise eine Temperatur im Bereich von 80–100 °C aufweisen.

**Claims**

1. The use of highly calcined α-Al$_2$O$_3$ as a filtering aid for the purification of alkaline solutions.

2. The use of highly calcined α-Al$_2$O$_3$ according to Claim 1 as a filtering aid for the purification of aluminate solutions, particularly sodium and/or potassium aluminate solutions, which preferably have a temperature in the range of from 80 to 100 °C.

**Revendications**

1. Utilisation d'α-Al$_2$O$_3$ fortement calciné comme auxiliaire de filtration pour l'épuration de solutions alcalines.

2. Utilisation d'α-Al$_2$O$_3$ fortement calciné suivant la revendication 1, comme auxiliaire de filtration pour l'épuration de solutions d'aluminates, en particulier de solutions d'aluminates de sodium et/ou de potassium, qui présentent de préférence une température de l'ordre de 80 à 100 °C.